# EUROPEAN PATENT APPLICATION

(11) **EP 4 446 284 A1**
(43) Date of publication of application: **16.10.2024**
(21) Application number: 24165891.3
(22) Date of filing: 25.03.2024
(51) Int. Cl.: C01G 51/04

(54) **POSITIVE ELECTRODE ACTIVE MATERIAL FOR LITHIUM SECONDARY BATTERY, METHOD OF PREPARING THE SAME, AND LITHIUM SECONDARY BATTERY INCLUDING POSITIVE ELECTRODE INCLUDING THE SAME**

(30) Priority: 26.03.2023 KR 20230039346; 07.04.2023 KR 20230046283
(71) Applicant: Samsung SDI Co., Ltd., Yongin-si, Gyeonggi-do 17084 (KR)
(72) Inventor: CHOO, Sungho, 17084 Yongin-si, Gyeonggi-do (KR)
(74) Representative: Gulde & Partner

(57) **Abstract**

A positive electrode active material for a lithium secondary battery, a method of preparing the same, a positive electrode for a lithium secondary battery including the same, and a lithium secondary battery including the positive electrode are provided. The positive electrode active material includes a lithium cobalt-based oxide, and a zirconium-based oxide on a surface of the lithium cobalt-based oxide, wherein the lithium cobalt-based oxide comprises 4,000 ppm or more of aluminum, and a content of zirconium in the positive electrode active material is in a range of about 15,000 ppm to about 20,000 ppm.

## Description

### BACKGROUND

### 1. Field

One or more embodiments relate to a positive electrode active material for a lithium secondary battery, a method of preparing the same, and a lithium secondary battery including a positive electrode including the same.

### 2. Description of the Related Art

Recent developments in the high-tech electronics industry have allowed electronic devices to become smaller and lighter in weight, which has led to an increase in the use of portable electronic devices. Lithium secondary batteries, which have a relatively high energy density and are usable for a relatively long time, are widely utilized as power sources for such portable electronic devices.

Lithium cobalt oxide (LiCoO₂) is widely utilized as a positive electrode active material for lithium secondary batteries with relatively high energy densities. However, if lithium cobalt oxide is utilized as a positive electrode active material, the positive electrode active material may be in contact with an electrolyte in the battery environment, and thus an interface structure may be destroyed due to corrosion by hydrofluoric acid (HF) at high voltages and high temperatures, resulting in the elution of cobalt (Co) and a decrease in capacity. Lithium cobalt oxide is doped with magnesium (Mg) to prevent or reduce structural collapse of a layered positive electrode active material in a high voltage environment. However, if magnesium (Mg) is doped in this way, capacity and efficiency may be reduced, and if a titanium (Ti) coating is applied, Mg moves to a surface due to the Kirkendall Effect, reducing an internal doping effect.

### SUMMARY

The invention is defined by the appended claims. The description that follows is subjected to this limitation. Any disclosure lying outside the scope of said claims is only intended for illustrative as well as comparative purposes. Aspects of one more embodiments of the present invention relate to a novel positive electrode active material for a lithium secondary battery which has improved high voltage stability, and a method of preparing the same.

Aspects of one or more embodiments of the present invention relate to a lithium secondary battery which has a high energy density and improved stability at high voltages and improved high temperature characteristics by utilizing a positive electrode including the above-described positive electrode active material for a lithium secondary battery.

Additional aspects will be set forth in part in the description which follows and, in part, will be apparent from the description, or may be learned by practice of the presented embodiments of the present disclosure.

According to one or more embodiments of the present invention, a positive electrode active material for a lithium secondary battery includes a lithium cobalt-based oxide, and a zirconium-based oxide disposed on a surface of the lithium cobalt-based oxide, wherein the lithium cobalt-based oxide comprises includes 4,000 ppm or more of aluminum, and a content of zirconium in the positive electrode active material is in a range of 15,000 ppm to 20,000 ppm.

The zirconium-based oxide may be a compound represented by Formula 1 below.:

[Formula 1] MgₓZr_{y}M1_{z}O₂

In Formula 1, 0≤x≤0.1, 0.8≤y≤1, 0≤z≤0.1, 0.9<x+y+z<1.1, and M1 may be at least one element of (e.g., at least one element selected from among) Co, Al, B, Ca, Sr, Ba, V, Cr, Fe, Cu, W, Mo, Ta, and Nb.

The zirconium-based oxide may be ZrO₂.

In Formula 1, x may be 0.

The zirconium-based oxide may be in particle form and have an average particle size of 0.2 µm to 2 µm, and/or the zirconium-based oxide may be in a form of islands on the surface of lithium cobalt-based oxide.

A content of aluminum may be in a range of 4,000 ppm to 8,000 ppm.

The content of zirconium in the positive electrode active material may be in a range of 18,000 ppm to 20,000 ppm.

The molar ratio of Zr/(Co+Zr) may be in a range of 0.25 to 0.35.

The positive electrode active material may be a compound represented by Formula 2 below.

[Formula 2] Li_{a-b}Mg_{b}CoₓAl_{y}M1_{z}O₂

In Formula 2, 0.9<a< < 1.1, 0≤b< < 0.1, 0.02≤x≤1, 0.015≤y≤0.03, 0< < z< < 0.03, 0.9≤x+y+z≤1.1, and M1 may be at least one element of (e.g., at least one element selected from among) Zr, Ni, Mn, B, Ca, Sr, Ba, V, Cr, Fe, Cu, W, Mo, Ta, and Nb.

The lithium cobalt-based oxide may include small particles, large particles, or a mixture of the small particles and the large particles, the large particles may have an average size of 10 µm to 120 µm, and the small particles may have an average size of 2 µm to 8 µm.

In one or more embodiments, the lithium cobalt-based oxide may include the mixture of the small particles and the large particles and In the mixture of the large particles and the small particles, a mixing weight ratio of the large particles and the small particles may be in a range of 7:3 to 9:1.

According to another aspect of the present invention, there is provided a method of preparing the before mentioned positive electrode active material for a lithium secondary battery, the method includes mixing a lithium cobalt-based oxide containing 4,000 ppm or more of aluminum and a zirconium precursor to obtain a mixture, wherein a content of the zirconium precursor in the mixture is specified such that a content of zirconium in the positive electrode active material is in a range of 15,000 ppm to 20,000 ppm, and performing a heat treatment on the mixture to prepare the positive electrode active material.

The zirconium precursor may be at least one of (e.g., at least one selected from among) zirconium hydroxide, zirconium chloride, zirconium sulfate, and zirconium oxide.

The heat treatment may be performed at a temperature of 900 ° to 1,100 °C.

According to another aspect of the present invention, there is provided a lithium secondary battery including a positive electrode which includes the before mentioned positive electrode active material, a negative electrode, and a separator interposed between the positive electrode and the negative electrode.

### BRIEF DESCRIPTION OF THE DRAWINGS

The above and other aspects, features, and/or principles of certain embodiments of the present disclosure will be more apparent from the following description taken in conjunction with the accompanying drawings, in which:
FIG. 1A is an image showing a result of a scanning electron microscope (SEM) image showing a cross-section of a positive electrode active material prepared according to Example 4;
FIG. 1B is an image showing a result of an SEM analysis of a positive electrode active material prepared according to Comparative Example 6;
FIGs. 2A - 2C are images each showing results of a scanning electron microscope-energy dispersive spectroscopy (SEM-EDS) analysis results of a positive electrode active material of Example 4;
FIG. 3 is a graph showing a molar ratio Zr/(Co+Zr) in positive electrode active materials of Examples 3 and 4;
FIGs. 4A - 4C are images each showing results of an SEM-EDS analysis of zirconium in a zirconium coating layer of the positive electrode active material of Example 4;
FIGs. 4D - 4F are images each showing results of an SEM-EDS analysis of cobalt in the zirconium coating layer of the positive electrode active material of Example 4;
FIG. 5 is an image showing a result of a transmission electron microscope - selected area electron diffraction (TEM-SAED) analysis of the positive electrode active material of Example 4; and
FIG. 6 schematically illustrates a structure of a lithium secondary battery according to one or more embodiments of the present disclosure.

### DETAILED DESCRIPTION

The present disclosure may be modified in many alternate forms, and thus specific embodiments will be illustrated in the drawings and described in more detail.

Reference will now be made in more detail to embodiments, examples of which are illustrated in the accompanying drawings, wherein like reference numerals refer to like elements throughout, and duplicative descriptions thereof may not be provided. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof.

Hereinafter, a positive electrode active material, a method of preparing the same, and a lithium secondary battery including a positive electrode including the same according to embodiments will be described in more detail.

A positive electrode active material according to the present invention includes a lithium cobalt-based oxide including 4,000 ppm or more of aluminum, and a zirconium-based oxide disposed on a surface of the lithium cobalt-based oxide. A content of zirconium is in a range of 15,000 ppm to 20,000 ppm.

As used herein, a ppm content of aluminum refers to a mass of aluminum with respect to the total mass of one million of a positive electrode active material, and a ppm content of zirconium refers to a mass of zirconium with respect to the total mass of one million of the positive electrode active material.

The zirconium-based oxide may be disposed in an island shape on a surface of the lithium cobalt-based oxide.

Lithium cobalt-based oxide (LiCoO₂) has a structure in which lithium, cobalt, and oxygen are regularly arranged in the form of O-Li-O-Co-O-Li-O-Co-O along a [111] crystal plane of a rock salt structure (O3-type or kind layered structure). If a lithium secondary battery utilizing such lithium cobalt-based oxide is charged, lithium ions are deintercalated out of a crystal lattice of the lithium cobalt-based oxide. However, if a charging voltage increases, an amount of lithium ions deintercalated from the crystal lattice of the lithium cobalt-based oxide increases, and at least a portion of the O3-type or kind layered structure may undergo a phase transition to an O1-type or kind layered structure in which Li is not present in a crystal lattice. In one or more embodiments, in a high voltage range in which a charging voltage is about 4.52 V or more (based on a full cell), phase transitions to an H1-3-type or kind layered structure in which both an O3-type or kind layered structure and an O1-type or kind layered structure are present in a crystal lattice of a lithium cobalt-based oxide. As such, a phase transition from the O3-type or kind layered structure to the H1-3-type or kind layered structure and the O1-type or kind layered structure is at least partially irreversible, and an amount of lithium ions capable of being intercalated/deintercalated may be decreased in the H1-3-type or kind layered structure and the O1-type or kind layered structure. Therefore, if such a phase transition occurs, the storage and life characteristics of a lithium secondary battery may be inevitably rapidly deteriorated.

In order to solve such a problem, lithium cobalt-based oxide doped with magnesium has been proposed as a positive electrode active material capable of preventing or reducing structure collapse in a high voltage environment. If magnesium is doped, magnesium occupies a lithium site and maintains a structurally stable state even if lithium is excessively discharged during discharging. However, for example, the capacity and charge/discharge efficiency of a lithium secondary battery may be deteriorated, and improvement in this regard is desired and/or required.

A method of applying a titanium (Ti) compound has been proposed to improve the above-described charge/discharge efficiency and surface resistance. For example, Mg doped into lithium cobalt-based oxide moves to a surface of the lithium-cobalt-based oxide by a Kirkendall effect, thereby forming an Mg-Ti composite material. However, in such a positive electrode active material, life characteristics of the positive electrode active material may be deteriorated due to a decrease in amount of magnesium (Mg) doped into the lithium cobalt-based oxide.

Embodiments of the present disclosure include lithium cobalt-based oxide doped with 4,000 ppm or more of aluminum (Al) in order to address the above-described problem. A portion of doped aluminum may substitute for a lithium site, and thus a stable structure may be maintained without doping with magnesium (Mg). In one or more embodiments, zirconium may be applied on a surface of the lithium cobalt-based oxide to improve resistance characteristics at a high voltage, and side effects caused by Ti and a Kirkendall effect may be minimized or reduced even if magnesium is doped into a positive electrode active material.

The positive electrode active material is a lithium cobalt-based oxide including 4,000 ppm or more of aluminum, and the zirconium-based oxide is disposed on a surface of the lithium cobalt-based oxide.

Zirconium is applied on the surface of the lithium cobalt-based oxide, and thus the positive electrode active material may not require a cobalt coating added for high voltage and high power characteristics in the lithium cobalt-based oxide. In one or more embodiments, it is possible to prepare a positive electrode active material that is stable in a high voltage environment, has improved capacity and charge/discharge efficiency, and has improved surface resistance and high-temperature characteristics without deterioration in life characteristics.

The lithium cobalt-based oxide may include small particles, large particles, or a mixture of the small particles and the large particles. The large particles may have a size (e.g., an average size D50) of 10 µm to 20 µm, and the small particles may have a size (e.g., an average size D50) of 2 µm to 8 µm. In the mixture of the large particles and the small particles, a mixing weight ratio of the large particles and the small particles may be in a range of 7:3 to 9:1.

The mixing weight ratio of the large particles and the small particles may be, for example, in a range of 8:2 to 9:1. If the mixing weight ratio of the large particles and the small particles is within the above ranges, high temperature storage characteristics may be improved.

As described above, the large particles may have a size of 10 µm to 20 µm, for example, a size of 14 µm to 20 µm or 15 µm to 20 µm. The small particles may have a size of 2 µm to 8 µm as described above, for example, a size of 3 µm to 7 µm or 3 µm to 5 µm.

As used herein, the term "size" or "diameter" refers to an average particle diameter if particles to be measured are spherical and refers to an average major axis length if particles are non-spherical.

The average particle diameter and the average major axis length refer to an average value of measured particle diameters and an average value of measured major axis lengths, respectively.

A size of particles may be evaluated utilizing a particle size analyzer, a scanning electron microscope (SEM), or a transmission electron microscope. As a particle size analyzer, for example, an LA-950 laser scattering particle size analyzer (manufactured by HORIBA Advanced Techno, Co., Ltd.) may be utilized.

According to embodiments, an average particle diameter may be, for example, an average particle diameter observed with a SEM, and may be calculated as an average value of particle diameters of about 10 particles to about 30 particles utilizing an SEM image.

If a size of particles is measured utilizing a particle size analyzer, an average particle diameter refers to D50.

D50 refers to an average diameter (or size) of particles whose cumulative volume corresponds to 50 vol% in a particle size distribution and refers to the value of the particle diameter (or size) corresponding to 50 % from the smallest particle when the total number of particles is set to 100 % in a distribution curve in which particles sizes are accumulated in the order from the smallest particle size to the largest particle size. D50 may be measured utilizing a particle size analyzer. In one or more embodiments, measurement may be performed utilizing a measuring device utilizing dynamic light-scattering, by which data analysis is performed to count the number of particles for each particle size range, and then D50 may be easily obtained therefrom through calculation.

The zirconium-based oxide may be a compound represented by Formula 1.

Formula 1 MgₓZr_{y}M1_{z}O₂

In Formula 1, 0≤x≤0.1, 0.8≤y≤1, 0≤z≤0.1, 0.9<x+y+z<1.1, and M1 may be at least one element of (e.g., at least one element selected from among) Co, Al, B, Ca, Sr, Ba, V, Cr, Fe, Cu, W, Mo, Ta, and Nb.

The zirconium-based oxide may belong to a space group Fd-3m and/or may have a cubic structure. In order to prevent or reduce a Kirkendall effect, if magnesium is not doped into the lithium cobalt-based oxide, x may be 0.

The zirconium-based oxide may be particle form (i.e., may have a structure on which particles having a size of 0.2 µm to 2 µm are applied. These particles may be distributed on the surface of the lithium cobalt-based oxide particles in the form of islands (i.e., zirconium-based oxide is only partially covering the surfaces of the lithium cobalt-based oxide particles). If the particle size of the zirconium-based oxide is within the above range, it is possible to obtain a positive electrode active material having improved surface resistance characteristics.

A content of aluminum in the positive electrode active material according to embodiments may be in a range of 4,000 ppm to 8,000 ppm (a range of 0.4 wt% to 0.8 wt% or a range of 1.5 mol% to 2.9 mol%) or in a range of 5,000 ppm to 6,500 ppm (a range of 1.8 mol% to 2.35 mol%). The content of aluminum may be in a range of 2.0 mol% to 3.3 mol% with respect to the total metal content of the positive electrode active material. If the content of aluminum is within the above ranges, it is possible to obtain a positive electrode active material having improved high voltage characteristics. Here, a high voltage may be in a range of 4.3 V to 4.8 V.

A content of zirconium in the positive electrode active material may be in a range of 15,000 ppm to 20,000 ppm (a range of 1.5 wt% to 2 wt% or a range of 1.59 mol% to 2.1 mol%) or in a range of 18,000 ppm to 20,000 ppm (a range of 1.9 mol% to 2.1 mol%). If the content of zirconium is within the above ranges, it is possible to manufacture a lithium secondary battery having excellent or suitable resistance characteristics and improved high temperature life characteristics.

If a lithium site of the positive electrode active material according to embodiments is doped with aluminum, the structural stability of a crystal structure of the lithium cobalt-based oxide may be improved even in a high temperature and high voltage environment, thereby improving life and resistance characteristics. For example, zirconium may substitute for some of the cobalt sites of the positive electrode active material so that surface resistance may be further improved.

The positive electrode active material according to embodiments may have an R-3m rhombohedral layered structure therein, and a coating film may have an Fm-3m cubic structure. The positive electrode active material may have a BET specific surface area of about 0.1 m²/g to about 3 m²/g.

The positive electrode active material including 4,000 ppm or more of aluminum may further include magnesium. Here, a content of magnesium may be, for example, in a range of 500 ppm to 2,000 ppm or 1,000 ppm to 1,200 ppm (a range of 0.4 mol% to 0.5 mol%). If the positive electrode active material according to embodiments further includes magnesium, high voltage characteristics and high temperature characteristics may be further improved.

As used herein, a ppm content of magnesium refers to a mass of magnesium with respect to the total mass of one million of the positive electrode active material.

A molar ratio Zr/(Co+Zr) in the positive electrode active material may be in a range of 0.25 to 0.35, 0.26 to 0.33, or 0.27 to 0.32. Here, a ratio represents a molar ratio. If the molar ratio Zr/(Co+Zr) is within the above ranges, it is possible to obtain a positive electrode active material having improved resistance and high voltage characteristics.

The lithium cobalt-based oxide material according to embodiments may be a compound represented by Formula 2.

Formula 2 Li_{a-b}Mg_{b}CoₓAl_{y}M1_{z}O₂

In Formula 2, 0.9<a < 1.1, 0≤b<0.1, 0.02≤x≤1, 0.015≤y≤0.03, 0<z<0.03, 0.9≤x+y+z≤1.1, and M1 may be at least one element of (e.g., at least one element selected from among) Zr, Ni, Mn, B, Ca, Sr, Ba, V, Cr, Fe, Cu, W, Mo, Ta, and Nb.

For example, the compound of Formula 2 may include magnesium.

In Formula 2, if M1 is Zr, a content of M1 may be greater than a content of magnesium. In Formula 2, y may satisfy 0.016≤y≤0.028, 0.017≤y≤0.027, 0.017≤y≤0.025, 0.017≤y≤0.024, or 0.018≤y≤0.0235.

In Formula 2, 0.01≤z≤0.025, 0.012≤z≤0.025, 0.013≤z≤0.024, 0.015≤z≤0.024, 0.016≤z≤0.023, 0.017≤z≤0.022, or 0.019≤z≤0.021.

Provided are a positive electrode and a lithium secondary battery which include the positive electrode active material. The lithium secondary battery according to embodiments exhibits excellent or suitable trickle charge stability. Here, the trick charge stability refers to a time required until a current rapidly rises during substantially continuous charging.

A positive electrode active material according to embodiments may be prepared through an operation of mixing the lithium cobalt-based oxide including 4,000 ppm or more of aluminum and a zirconium precursor to obtain a mixture, and performing heat treatment on the mixture.

The zirconium precursor may include, for example, at least one of (e.g., at least one selected from among) zirconium hydroxide, zirconium chloride, zirconium sulfate, and zirconium oxide.

The heat treatment may be performed at a temperature of 900 °C to 1,100 °C, or about 900 °C to about 1,000 °C. If the heat treatment is performed within the above range, it is possible to prepare a positive electrode active material having excellent or suitable particle strength and excellent or suitable high voltage and high temperature characteristics.

The lithium cobalt-based oxide may include, for example, a mixture of large particles and small particles. A method of preparing a positive electrode active material utilizing such a mixture will be described in more detail.

First, a first mixture is obtained by mixing a cobalt precursor having a size of about 1 µm to about 10 µm, an aluminum precursor, and a lithium precursor.

A magnesium precursor may be further added to the first mixture as needed.

In one or more embodiments, in order to obtain a desired or suitable lithium cobalt-based oxide, a mixing ratio may be stoichiometrically controlled or selected to mix the lithium precursor, the cobalt precursor, the aluminum precursor, and the magnesium precursor, thereby obtaining a precursor mixture.

The lithium precursor may include at least one of (e.g., at least one selected from among) lithium hydroxide (LiOH), lithium carbonate (Li₂CO₃), lithium chloride, lithium sulfate (Li₂SO₄), and/or lithium nitrate (LiNO₃).

The cobalt precursor may include at least one of (e.g., at least one selected from among) cobalt carbonate, cobalt oxide, cobalt chloride, cobalt sulfate, and/or cobalt nitrate. The aluminum precursor may include at least one of (e.g., at least one selected from among) aluminum sulfate, aluminum chloride, and/or aluminum hydroxide. The magnesium precursor may include at least one of (e.g., at least one selected from among) magnesium sulfate, magnesium chloride, and/or magnesium hydroxide.

The mixing may be performed through dry mixing such as mechanical mixing utilizing, for example, a ball mill, a Bambari mixer, a homogenizer, a Hensel mixer, and/or the like. Dry mixing may reduce manufacturing costs as compared with wet mixing.

As described above, the cobalt precursor may have a size of about 1 µm to about 10 µm, for example, about 4 µm to about 7 µm. If the size of the cobalt precursor is less than about 1 µm, particle growth may be slow, and if the size of the cobalt precursor is greater than about 10 µm, it is difficult to obtain large particles of lithium cobalt-based oxide having a target size.

Subsequently, the first mixture may be subjected to primary heat treatment in an air or oxygen atmosphere to obtain large particles of lithium cobalt-based oxide which is a first heat treatment product.

The large particles of the lithium cobalt-based oxide which are large particles of the primary heat treatment product may have a particle size of 10 µm to 20 µm, for example, 14 µm to 20 µm, and for example, 17 µm.

Separately, a cobalt precursor having a size of 2 µm to 3 µm, an aluminum precursor, and a lithium precursor may be mixed to obtain a second mixture, and the second mixture may be subjected to primary heat treatment to prepare small particles of lithium cobalt-based oxide.

The primary heat treatment may be performed at a temperature of 900 °C to 1,100 °C.

If the second mixture is prepared, a magnesium precursor may be further added.

The small particles of the lithium cobalt-based oxide may have a size of about 2 µm to about 8 µm, for example, about 3 µm to about 4 µm.

If the size of the cobalt precursor utilized in preparing the small particles of the lithium cobalt-based oxide is less than about 2 µm or greater than about 8 µm, it is difficult to obtain small particles of lithium cobalt composite oxide having a target size.

During preparation of the large particles of the lithium cobalt-based oxide and the small particles of the lithium cobalt-based oxide, a mixing molar ratio of lithium to metal (e.g., metals in the lithium cobalt-based oxide other than lithium) may be in a range of about 1:1.01 to about 1:1.05, for example, about 1:1.02 to about 1:1.04.

In an operation of preparing the large particles of the lithium cobalt-based oxide and the small particles of the lithium cobalt-based oxide, a heating rate may be in a range of about 4 °C/min to about 8 °C/min. If the heating rate is within the above range, cation mixing may be prevented or reduced. If the heating rate is less than 4 °C/min, phase stability improvement at a high voltage may be insignificant.

The large particles of the lithium cobalt-based oxide and the small particles of the lithium cobalt-based oxide described above may be mixed in a weight ratio of about 7:3 to about 9:1, a zirconium precursor may be added thereto to obtain a third mixture, and then secondary heat treatment may be performed thereon. The secondary heat treatment may be performed at a temperature of about 900 °C to 1,000 °C, for example, about 950 °C to about 1,000 °C. During the secondary heat treatment, a heating rate may be in a range of about 4 °C/min to about 6 °C/min.

The zirconium precursor may include, for example, at least one of (e.g., at least one selected from among) zirconium oxide, zirconium hydroxide, zirconium chloride, and/or zirconium sulfate.

The above-described secondary heat treatment may be performed in an air or oxygen atmosphere. Here, the oxygen atmosphere may be formed utilizing oxygen alone or utilizing oxygen, nitrogen and an inert gas. A heat treatment time is variable depending on a heat treatment temperature. For example, the heat treatment time may be in a range of about 5 hours to about 20 hours.

A positive electrode active material according to embodiments may be prepared through a preparing method such as a spray pyrolysis method in addition to the above solid phase method.

According to one or more embodiments, provided is a lithium secondary battery including a positive electrode that includes the above-described lithium cobalt-based oxide. A method of manufacturing a lithium secondary battery is described in more details as follows.

A positive electrode is prepared according to the following method.

A positive electrode active material composition in which a positive electrode active material, which is a positive electrode active material according to embodiments, a binder, and a solvent are mixed is prepared. A conductive material may be further added to the positive electrode active material composition. The positive electrode active material composition is applied directly on a positive electrode current collector and dried to prepare a positive electrode plate. In one or more embodiments, the positive electrode active material composition may be cast on a separate support, and then a film peeled off of the support may be laminated on the positive electrode current collector to prepare the positive electrode plate. A first positive electrode active material, which is a positive electrode active material commonly utilized / generally utilized in a lithium secondary battery, may be further included during preparation of the positive electrode. The first positive electrode active material may further include at least one of (e.g., at least one selected from among) lithium cobalt oxide, lithium nickel cobalt manganese oxide, lithium nickel cobalt aluminum oxide, lithium iron phosphate oxide, and/or lithium manganese oxide, but the present disclosure is not necessarily limited thereto. Any suitable positive electrode active material available in the art may be utilized. For example, the first positive electrode active material may include a compound represented by any one of (e.g., any one selected from among) LiₐA_{1-b}B'_{b}D₂(wherein 0.90≤a≤ 1.8 and 0≤b≤0.5), LiₐE_{1-b}B'_{b}O_{2-c}D_{c} (wherein 0.90≤a≤1.8, 0≤b≤0.5, and 0≤c≤ 0.05), LiE_{2-b}B'_{b}O_{4-c}D_{c} (wherein 0≤b≤0.5 and 0≤c≤0.05), LiₐN_{1-b-c}Co_{b}B'_{c}D_{α} (wherein 0.90≤a≤1.8, 0≤b≤0.5, 0≤c≤0.05, and 0<α≤2), LiₐNi_{1-b-c}Co_{b}B'_{c}O_{2-α}F'_{α} (wherein 0.90≤a≤1.8, 0≤b≤0.5, 0≤c≤0.05, and 0<α < 2), LiₐNi_{1-b-c}Mn_{b}B'_{c}D_{α} (wherein 0.90≤a≤1.8, 0≤b≤0.5, 0≤c≤0.05, and 0<α≤2), LiₐNi_{1-b-c}Mn_{b}B'_{c}O_{2-α}F'_{α} (wherein 0.90≤a≤1.8, 0≤b≤0.5, 0≤c≤0.05, and 0<α≤2), LiₐNi_{b}E_{c}G_{d}O₂ (wherein 0.90≤a≤1.8, 0≤b≤0.9, 0≤c≤0.5, and 0.001 ≤d≤0.1), LiₐNi_{b}Co_{c}Mn_{d}GₑO₂ (wherein 0.90≤a≤1.8, 0≤b≤0.9, 0≤c≤0.5, 0≤d≤0.5, and 0.001≤e≤0.1); LiₐNiG_{b}O₂ (wherein 0.90≤a≤1.8, and 0.001≤b≤0.1), LiₐCoG_{b}O₂ (wherein 0.90≤a≤1.8, and 0.001≤b≤0.1), LiₐMnG_{b}O₂ (0.90≤a≤1.8, and 0.001≤b≤0.1), LiₐMn₂G_{b}O₄ (wherein 0.90≤a≤1.8, and 0.001≤b≤0.1), QO₂, QS₂, LiQS₂, V₂O₅, LiV₂O₅, LiI'O₂, Li_{(3-f)}J₂(PO₄)₃ (wherein f≤2), Li_{(3-f)}J₂ (wherein (0≤f≤2), Li_{(3-f)}Fe₂(PO₄)₃, LiNiVO₄, and LiFePO₄. In the above formulas, A may be Ni, Co, Mn, or a combination thereof; B' may be Al, Ni, Co, Mn, Cr, Fe, Mg, Sr, V, a rare earth element, or a combination thereof; D may be O, F, S, P, or a combination thereof; E may be Co, Mn, or a combination thereof; F' may be F, S, P, or a combination thereof; G may be Al, Cr, Mn, Fe, Mg, La, Ce, Sr, V, or combinations thereof; Q may be Ti, Mo, Mn, or a combination thereof; I' may be Cr, V, Fe, Sc, Y, or a combination thereof; and J may be V, Cr, Mn, Co, Ni, Cu, or a combination thereof.

Examples of the binder in the positive electrode active material composition may include polyvinylidene fluoride (PVDF), a polyvinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene (PE), polypropylene (PP), an ethylene-propylene-diene monomer (EPDM), a sulfonated-EPDM, styrene-butadiene rubber (SBR), fluorine rubber, polyamide-imide, a polyacrylic acid (PAA), lithium polyacrylate, lithium polymethacrylate, and/or one or more suitable copolymers thereof.

As the conductive material, a material is not limited as long as the material has conductivity (e.g., is a conductor) without causing a chemical change in a corresponding battery. For example, the conductive material may include graphite such as natural graphite or artificial graphite, a carbon-based material such as carbon black, acetylene black, Ketjen black, channel black, furnace black, lamp black, or summer black, a conductive fiber such as a carbon fiber or a metal fiber, fluorinated carbon, a metal powder such as an aluminum or nickel powder, conductive whiskers (e.g., single crystals in the form of filaments) such as zinc oxide or potassium titanate, a conductive metal oxide such as titanium oxide, a conductive polymer such as a polyphenylene derivative, and/or the like.

A content of the conductive material may be in a range of about 1 part by weight to about 10 parts by weight or about 1 part by weight to about 5 parts by weight with respect to about 100 parts by weight of the positive electrode active material. If the content of the conductive material is within the above range, the conductivity characteristics of a finally obtained electrode may be excellent or suitable.

As a non-limiting example of the solvent, N-methylpyrrolidone, and/or the like may be utilized, and a content of the solvent may be in a range of about 20 parts by weight to about 200 parts by weight with respect to about 100 parts by weight of the positive electrode active material. If the content of the solvent is within the above range, an operation of forming the positive electrode active material layer may be easy.

The positive electrode current collector may have a thickness of about 3 µm to about 500 µm, and the material(s) thereof is not particularly limited as long as the material has high conductivity without causing a chemical change in a corresponding battery. For example, the positive electrode current collector may include stainless steel, aluminum, nickel, titanium, carbon subjected to heat treatment, or copper or stainless steel which is surface-treated with carbon, nickel, titanium, silver, and/or the like. A fine unevenness may be formed on a surface of the positive electrode current collector to strengthen an adhesive strength of a positive electrode active material, and the positive electrode current collector may have one or more suitable forms such as a film, a sheet, a foil, a net, a porous body, a foam body, and/or a nonwoven fabric.

The positive electrode current collector may include, for example, a plate or foil made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The positive electrode current collector may not be provided. The positive electrode current collector may have, for example, a size (thickness) of about 1 µm to about 100 µm, about 1 µm to about 50 µm, about 5 µm to about 25 µm, or about 10 µm to about 20 µm.

The positive electrode current collector may include, for example, a base film and a metal layer disposed on one or both (e.g., simultaneously) surfaces of the base film. The base film may include, for example, a polymer. The polymer may be, for example, a thermoplastic polymer. The polymer may include, for example, polyethylene terephthalate (PET), PE, PP, polybutylene terephthalate (PBT), polyimide (PI), or a combination thereof. The base film may include the thermoplastic polymer, and thus if a short circuit occurs, the base film may be liquefied to suppress or reduce a rapid increase in current. The base film may be, for example, an insulator. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The positive electrode current collector may additionally include a metal chip and/or a lead tab. For more specific contents of the base film, the metal layer, the metal chip, and the lead tab of the positive electrode current collector, contents of a negative electrode current collector are referred to. The positive electrode current collector may have such a structure, and thus a weight of an electrode may be reduced, thereby improving an energy density.

In one or more embodiments, it is also possible to form pores in an electrode by further adding a plasticizer to the positive electrode active material composition and/or a negative electrode active material composition.

The contents of the positive electrode active material, the conductive material, the binder, and the solvent are at a level commonly utilized / generally utilized in a lithium secondary battery. At least one of the conductive material, the binder and/or the solvent may not be provided depending on the use and configuration of a lithium secondary battery.

A negative electrode may be obtained in substantially the same manner as the positive electrode, except that a negative electrode active material has been utilized instead of the positive electrode active material used in a process of preparing the above-described positive electrode.

The negative electrode active material may include a carbon-based material, silicon, silicon oxide, a silicon-based alloy, a silicon-carbon-based material composite, tin, a tin-based alloy, a tin-carbon composite, a metal oxide, or a combination thereof.

The carbon-based material may be crystalline carbon, amorphous carbon, or a mixture thereof. Examples of the crystalline carbon may include graphite such as natural graphite or artificial graphite having a non-shaped, plate-like, flake-like, spherical, or fibrous form. Examples of the amorphous carbon may include soft carbon (low temperature calcined carbon), hard carbon, mesophase pitch carbide, calcinated coke, graphene, carbon black, carbon nanotubes, a carbon fiber, and/or the like, but the present disclosure is not necessarily limited thereto. Any suitable material usable in the art may be utilized.

The negative electrode active material may include Si, SiOₓ (wherein 0<x<2, for example, x is in a range of 0.5 to 1.5), Sn, SnO₂, a silicon-containing metal alloy, and/or a mixture thereof. A metal capable of forming the silicon-containing metal alloy may include at least one of (e.g., at least one selected from among) Al, Sn, Ag, Fe, Bi, Mg, Zn, In, Ge, Pb, and Ti.

The negative electrode active material may include a metal/metalloid that is alloyable with lithium, an alloy thereof, or an oxide thereof. Examples of the metal/metalloid alloyable with lithium may include Si, Sn, Al, Ge, Pb, Bi, Sb, a Si-Y alloy (wherein Y is an alkali metal, an alkali earth metal, a Group 13 element, a Group 14 element, a transition metal, a rare earth element, or a combination thereof, and is not Si), a Sn-Y alloy (wherein Y is an alkali metal, an alkali earth metal, a Group 13 element, a Group 14 element, a transition metal, a rare earth element, or a combination thereof, and is not Sn), MnOₓ (wherein 0<x≤2), and/or the like. The element Y may include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, or a combination thereof. For example, oxides of the metal/metalloid alloyable with lithium may include lithium titanium oxide, vanadium oxide, lithium vanadium oxide, SnO₂, SiOₓ (wherein 0<x<2), and/or the like.

The negative electrode active material may include, for example, at least one element of (e.g., at least one element selected from among) a Group 13 element, a Group 14 element, and/or a Group 15 element of the Periodic Table of the Elements, and for example, at least one element of (e.g., at least one selected from among) Si, Ge, and/or Sn.

The binder in the negative electrode active material composition may include a non-water-soluble binder, a water-soluble binder, or a combination thereof.

Examples of the non-water-soluble binder may include an ethylene propylene copolymer, polyacrylonitrile, polystyrene, polyvinylchloride, carboxylated polyvinylchloride, polyvinylfluoride, polyurethane, polytetrafluoroethylene, polyvinylidene fluoride polyethylene, polypropylene, polyamide-imide, polyimide (PI), or a combination thereof.

Examples of the water-soluble binder may include SBR, acrylated styrene-butadiene rubber (ABR), acrylonitrile-butadiene rubber, acrylic rubber, butyl rubber, fluorine rubber, an ethylene oxide-containing polymer, polyvinylpyrrolidone, polyepichlorohydrin, polyphosphazene, an ethylene-propylene-diene copolymer, polyvinylpyridine, chlorosulfonated polyethylene, latex, a polyester resin, an acrylic resin, a phenol resin, an epoxy resin, polyvinyl alcohol, or a combination thereof.

If the water-soluble binder is utilized as the binder in the negative electrode active material composition, a cellulose-based compound capable of imparting viscosity may be further included as a thickener. As the cellulose-based compound, one or more of (e.g., one or more selected from among) carboxymethyl cellulose, hydroxypropylmethyl cellulose, methyl cellulose, and/or an alkali metal salt thereof may be mixed and utilized. The alkali metal may include Na, K, or Li. A content of the thickener may be in a range of about 0.1 parts by weight to about 3 parts by weight with respect to about 100 parts by weight of the negative electrode active material.

The conductive material may include a carbon-based material such as natural graphite, artificial graphite, carbon black, acetylene black, Ketjen black, or a carbon fiber, a metal-based material such as a metal powder or a metal fiber of copper, nickel, aluminum, silver, and/or the like, a conductive polymer such as a polyphenylene derivative, or a conductive material including a mixture thereof.

As the solvent in the negative electrode active material composition, the same solvent as the positive electrode active material composition may be utilized. A content of the solvent is at a level commonly utilized /generally utilized in a lithium secondary battery.

The negative electrode current collector may be made of, for example, a material that does not react (or should not substantially react) with lithium, for example, does not form either an alloy or a compound together with lithium. Examples of a material constituting the negative electrode current collector may include copper (Cu), stainless steel, titanium (Ti), iron (Fe), cobalt (Co), nickel (Ni), and/or the like, but the present disclosure is not necessarily limited thereto. Any suitable material utilized in a negative electrode current collector in the art may be utilized. The negative electrode current collector may be made of one of (e.g., one selected from among) the above-described metals or an alloy of two or more metals or a coating material. The negative electrode current collector may be, for example, in the form of a plate or foil.

The negative electrode current collector may include, for example, a base film and a metal layer disposed on one or both surfaces of the base film. The base film may include, for example, a polymer. The polymer may be, for example, a thermoplastic polymer. The polymer may include, for example, PET, PE, PP, PBT, PI, or a combination thereof. The base film may include the thermoplastic polymer, and thus if a short circuit occurs, the base film may be liquefied to suppress or reduce a rapid increase in current. The base film may be, for example, an insulator. The metal layer may include, for example, copper (Cu), stainless steel, titanium (Ti), iron (Fe), cobalt (Co), nickel (Ni), or an alloy thereof. The metal layer may serve as an electrochemical fuse and may be cut if an overcurrent occurs, thereby performing a short circuit prevention function. A thickness of the metal layer may be adjusted to adjust a limit current and a maximum current. The metal layer may be plated or deposited on the base film. If the thickness of the metal layer is decreased, a limit current and/or a maximum current of the negative electrode current collector may be decreased, and thus the stability of a lithium battery during a short circuit may be improved. A lead tab may be added onto the metal layer for external connection. The lead tab may be welded to the metal layer or a metal layer/base film stack through ultrasonic welding, laser welding, spot welding, and/or the like. While the base film and/or the metal layer is melted during welding, the metal layer may be electrically connected to the lead tab. In order to more strongly weld the metal layer and the lead tab together, a metal chip may be added between the metal layer and the lead tab. The metal chip may be a flake made of the same material as a metal of the metal layer. The metal chip may be, for example, a metal foil or a metal mesh. The metal chip may be, for example, an aluminum foil, a copper foil, or a SUS foil. If the metal chip is disposed on the metal layer and then welded to the lead tab, the lead tab may be welded to the metal chip/metal layer stack or a metal chip/metal layer/base film stack. During welding, while the base film, the metal layer, and/or the metal chip are melted, the metal layer or a metal layer/metal chip stack may be electrically connected to the lead tab. A metal chip and/or a lead tab may be added onto a portion of the metal layer. The base film may have, for example, a thickness of about 1 µm to 50 µm, about 1.5 µm to about 50 µm, about 1.5 µm to about 40 µm, or about 1 µm to about 30 µm. If the base film has a thickness in such ranges, a weight of an electrode assembly may be more effectively reduced. A melting point of the base film may be, for example, in a range of about 100 °C to about 300 °C, about 100 °C to about 250 °C, or about 100 °C to about 200 °C. The base film has a melting point in such ranges, and thus the base film may be melted and easily electrically connected to the lead tab in a process of welding the lead tab. In order to improve adhesive strength between the base film and the metal layer, surface treatment such as corona treatment may be performed on the base film. The metal layer may have, for example, a thickness of about 0.01 µm to about 3 µm, about 0.1 µm to about 3 µm, about 0.1 µm to about 2 µm, or about 0.1 µm to about 1 µm. If the metal layer has a thickness in such ranges, the stability of an electrode assembly may be secured while conductivity is maintained. The metal chip may have, for example, a thickness of about 2 µm to about 10 µm, about 2 µm to about 7 µm, or about 4 µm to about 6 µm. If the metal chip has a thickness in such ranges, the metal layer and the lead tab may be more easily electrically connected. The negative electrode current collector may have such a structure, and thus a weight of an electrode may be reduced, thereby improving an energy density.

A separator may be interposed between a positive electrode and a negative electrode, and an insulating thin film having high ion permeability and mechanical strength may be utilized therefor.

The separator may generally have a pore diameter of about 0.01 µm to about 10 µm and may generally have a thickness of about 5 µm to about 20 µm. The separator may include, for example, an olefin-based polymer such as polypropylene or a sheet or non-woven fabric made of a glass fiber or polyethylene. If a solid polymer electrolyte is utilized as an electrolyte, the solid polymer electrolyte may serve as the separator.

The separator made of an olefin-based polymer may be provided as, for specific example, a single film of PE, polypropylene, or polyvinylidene fluoride, a multi-film of at least two thereof, or a mixed multi-film such as a two-layer separator of polyethylene/polypropylene, a three-layer separator of PE/polypropylene/PE, or a three-layer separator of polypropylene/PE/polypropylene.

A lithium salt-containing a non-aqueous electrolyte may include a non-aqueous electrolyte and a lithium salt.

The non-aqueous electrolyte may include an organic solvent an organic solid electrolyte, or an inorganic solid electrolyte.

The non-aqueous electrolyte may include an organic solvent. Any suitable material usable as an organic solvent in the art may be utilized as the organic solvent. Examples of the organic solvent may include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, fluoroethylene carbonate, benzonitrile, acetonitrile, tetrahydrofuran, 2-methyl tetrahydrofuran, γ-butyrolactone, dioxirane, 4-methyl dioxirane, N,N-dimethylformamide, N,N-dimethylacetamide, dimethyl sulfoxide, dioxane, 1,2-dimethoxyethane, sulfolane, dichloroethane, chlorobenzene, nitrobenzene, diethylene glycol, dimethyl ether, and/or a mixture or combination thereof.

Examples of the organic solid electrolyte may include a polyethylene derivative, a polyethylene oxide derivative, a polypropylene oxide derivative, a phosphoric acid ester polymer, polyvinyl alcohol, and/or the like.

Examples of the inorganic solid electrolyte may include Li₃N, Lil, Li₅Nl₂, Li₃N-LiI-LiOH, Li₂SiS₃, Li₄SiO₄, Li₄SiO₄-LiI-LiOH, Li₃PO₄-Li₂S-SiS₂, and/or the like.

The lithium salt may be a material that is readily soluble in the above-described non-aqueous electrolyte and may include, for example, LiPF₆, LiBF₄, LiSbF₆, LiAsF₆, LiClO₄, LiCF₃SO₃, Li(CF₃SO₂)₂N, Li(FSO₂)₂N, LiC₄F₉SO₃, LiAlO₂, LiAlCl₄, LiN(CₓF₂ₓ₊₁SO₂)(C_{y}F_{2y+1}SO₂) (wherein x and y are each a natural number), LiCl, Lil, or a mixture thereof. In order to improve charge/discharge characteristics, flame retardancy, and/or the like, for example, pyridine, triethyl phosphite, triethanolamine, cyclic ether, ethylenediamine, n-glyme, hexamethyl phosphoramide, a nitrobenzene derivative, sulfur, quinone, an imine dye, N-substituted oxazolidinone, N,N-substituted imidazolidine, ethylene glycol dialkyl ether, an ammonium salt, pyrrole, 2-methoxy ethanol, aluminum trichloride, and/or the like may be added to the non-aqueous electrolyte. In one or more embodiments, in order to impart incombustibility, the non-aqueous electrolyte may further include a halogen-containing solvent such as carbon tetrachloride or ethylene trifluoride. A concentration of the lithium salt may be in a range of about 1 M to about 2.0 M. If the concentration of the lithium salt is within the above range, an electrolyte may have appropriate or suitable conductivity and viscosity and thus exhibit excellent or suitable electrolyte performance so that lithium ions may move effectively.

A lithium secondary battery may include a positive electrode, a negative electrode, and a separator. The separator may be provided as a single film of PE, polypropylene, or polyvinylidene fluoride, a multi-film of at least two thereof, or a mixed multi-film such as a two-layer separator of polyethylene/polypropylene, a three-layer separator of PE/polypropylene/PE, or three-layer separator of polypropylene/PE/polypropylene layer.

The above-described positive electrode, negative electrode, and separator may be wound or folded and accommodated in a battery case. Subsequently, an organic electrolyte may be injected into the battery case and sealed with a cap assembly to complete a lithium secondary battery. The battery case may be a cylindrical, prismatic, or thin film type or kind.

The separator may be disposed between the positive electrode and the negative electrode to form a battery structure. The battery structure may be stacked in a bi-cell structure to then be impregnated in an organic electrolyte, and an obtained result (product) may be accommodated in a pouch and sealed, thereby completing a lithium ion polymer battery.

For example, a plurality of battery structures may be stacked to form a battery pack, and such a battery pack may be utilized in any device requiring high capacity and high power. For example, the battery pack may be utilized in laptops, smart phones, electric vehicles, and/or the like.

Although an example in which a lithium secondary battery according to embodiments is a prismatic type or kind has been described, the present disclosure is not limited thereto, and the lithium secondary battery may be provided as one or more suitable types (kinds) of batteries such as a cylindrical type or kind, a pouch type or kind, and a coin type or kind.

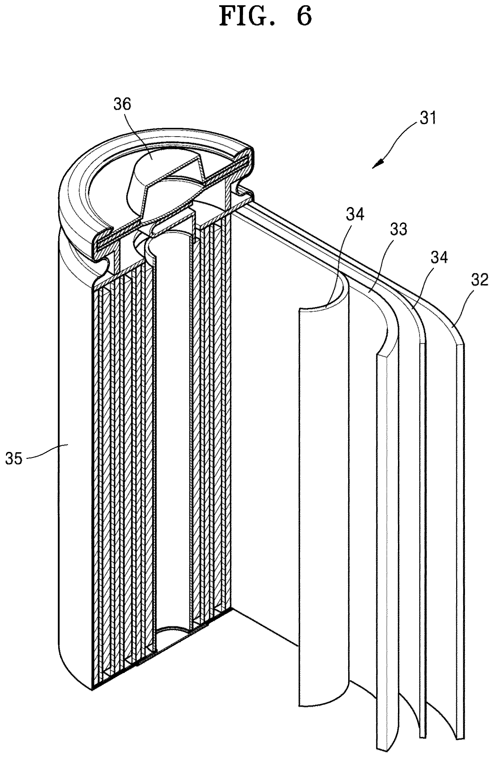

FIG. 6 is a schematic cross-sectional view illustrating a representative structure of a lithium secondary battery 31 according to embodiments of the present disclosure.

Referring to FIG. 6, the lithium secondary battery 31 may include a positive electrode 33, a negative electrode 32, and a separator 34. An electrode assembly in which the positive electrode 33, the negative electrode 32, and the separator 34 are wound or folded may be accommodated in a battery case 35. According to a shape of a battery, a separator 34 may be disposed between a positive electrode 33 and a negative electrode 32, and the separator 34, the positive electrode 33, and the negative electrode 32 may be alternately stacked to form a battery structure. Subsequently, an organic electrolyte may be injected into the battery case 35, and the battery case 35 may be sealed with a cap assembly 36 to complete the lithium secondary battery 31. The battery case 35 may be a cylindrical, prismatic, or thin film type or kind. For example, the lithium secondary battery 31 may be a large-sized thin-film battery. The lithium secondary battery 31 may be a lithium ion battery. The battery structure may be accommodated in a pouch, impregnated in an organic electrolyte, and then sealed, thereby completing a lithium ion polymer battery. For example, a plurality of battery structures may be stacked to form a battery pack, and such a battery pack may be utilized in any device requiring high capacity and high power. For example, the battery structure may be utilized in laptops, smart phones, electric vehicles, and/or the like.

Hereinafter, the present disclosure will be described in more detail with reference to the following Examples and Comparative Examples.

### Preparation of positive electrode active material

### Example 1: LCO doped with 5,000 ppm Al and 1,000 ppm Mg and surface coated with 18,000 ppm Zr

Lithium carbonate (Li₂CO₃), a cobalt precursor (Co₃O₄) (D50: 4.5 µm), magnesium carbonate (MgCO₃), and aluminum oxide (Al₂O₃) were mixed to obtain a first mixture. Contents of lithium carbonate (Li₂CO₃), Co₃O₄ (D50: 4.5 µm), magnesium carbonate, and aluminum oxide (Al₂O₃) in the first mixture were stoichiometrically controlled or selected to obtain Li_{1.04}Mg_{0.004}C_{0.982}Al_{0.018}O₂.

The first mixture was heated to a temperature of 1,088 °C at a heating rate of 6 °C/min and then subjected to a primary heat treatment at the temperature of 1,088 °C for 15 hours in an air atmosphere to prepare large particles (Li_{1.04}Mg_{0.004}Co_{0.982}Al_{0.018}O₂) having a layered structure and an average particle diameter (D50) of about 17 µm. The average particle diameters D50 in the experimental part are determined by a dynamic light-scattering method utilizing a LA-950 laser scattering particle size analyzer (manufactured by HORIBA Advanced Techno, Co., Ltd.).

Separately, a cobalt precursor (Co₃O₄) (D50: 2.5 µm), magnesium carbonate (MgCO₃), aluminum oxide (Al₂O₃), and lithium carbonate (Li₂CO₃) were mixed to obtain a second mixture. Contents of Co₃O₄ (D50: 2.5 µm), aluminum oxide, magnesium carbonate, and lithium carbonate in the second mixture were stoichiometrically controlled or selected to obtain Li_{1.04}Mg_{0.004}Co_{0.982}Al_{0.018}O₂.

The second mixture was heated to a temperature of 940 °C at a heating rate of 4.5 °C/min and then subjected to a primary heat treatment at the temperature of 940 °C for 5 hours to obtain small particles (Li_{1.04}Mg_{0.004}Co_{0.982}Al_{0.018}O₂) having an average particle diameter (D50) of about 3.5 µm.

The large particles and the small particles obtained in such a process were mixed in a weight ratio of 8:2, and then zirconium oxide (ZrO₂) (D50: 0.7 um) having an average particle diameter (D50) of about 1 µm was added thereto to obtain a third mixture. The third mixture was subjected to a secondary heat treatment at a temperature of about 900 °C to obtain a bimodal positive electrode active material. A content of the zirconium oxide was stoichiometrically controlled or selected such that a content of zirconium in the bimodal positive electrode active material was 18,000 ppm.

The bimodal positive electrode active material included large particles (Li_{1.04}Mg_{0.004}Co_{0.982}Al_{0.018}O₂ with a D50 of 17 µm) having a surface on which a ZrO₂ coating film was formed and small particles (Li_{1.04}Mg_{0.004}Co_{0.982}Al_{0.018}O₂ with a D50 of 3.5 µm) having a surface on which a ZrO₂ coating film was formed. The resultant formula including the Zr-coated large and small particles was Li_{1.04}Mg_{0.004}Co_{0.982}Al_{0.018}Zr_{0.019}O₂.

### Example 2: LCO doped with 5,000 ppm Al and 1,000 ppm Mg and surface coated with 20,000 ppm Zr

Lithium carbonate, a cobalt precursor (Co₃O₄) (D50: 4.5 µm), magnesium carbonate (MgCO₃), and aluminum oxide (Al₂O₃) were mixed to obtain a first mixture. Contents of lithium carbonate, Co₃O₄ (D50: 4.5 µm), magnesium carbonate (MgCO₃), and aluminum oxide (Al₂O₃) in the first mixture were stoichiometrically controlled or selected to obtain Li_{1.04}Mg_{0.004}Co_{0.982}Al_{0.018}O₂.

The first mixture was heated to a temperature of 1,088 °C at a heating rate of 6 °C/min and then subjected to a primary heat treatment at the temperature of 1,088 °C for 15 hours in an air atmosphere to prepare large particles (Li_{1.04}Mg_{0.004}Co_{0.982}Al_{0.018}O₂) having a layered structure and an average particle diameter (D50) of about 17 µm.

Separately, a cobalt precursor (Co₃O₄) (D50: 2.5 µm), aluminum oxide (Al₂O₃), magnesium carbonate, and lithium carbonate were mixed to obtain a second mixture. Contents of Co₃O₄, magnesium carbonate, aluminum oxide, and lithium carbonate in the second mixture were stoichiometrically controlled or selected to obtain Li_{1.04}Mg_{0.004}Co_{0.982}Al_{0.018}O₂.

The second mixture was heated to a temperature of 940 °C at a heating rate of 4.5 °C/min and then subjected to a primary heat treatment at the temperature of 940 °C for 5 hours to obtain small particles (Li_{1.04}Mg_{0.004}Co_{0.982}Al_{0.018}O₂) having a layered structure and an average particle diameter (D50) of about 3.5 µm.

The large particles and the small particles obtained in such a process were mixed in a weight ratio of 8:2, and then zirconium oxide (ZrO₂) was added thereto to obtain a third mixture. A content of the zirconium oxide was stoichiometrically controlled or selected such that a content of zirconium in a composite positive electrode active material was 20,000 ppm. The zirconium oxide (ZrO₂) had an average particle diameter (D50) of about 1 µm. The third mixture was subjected to a secondary heat treatment at a temperature of about 900 °C to obtain a bimodal positive electrode active material. A content (e.g., amount) of the zirconium oxide was stoichiometrically controlled or selected such that a content (e.g., amount) of zirconium in the bimodal positive electrode active material was 20,000 ppm. The bimodal positive electrode active material included large particles (Li_{1.04}Mg_{0.004}Co_{0.982}Al_{0.018}O₂ with a D50 of 17 µm) having a surface on which a ZrO₂ coating film was formed and small particles (Li_{1.04}Mg_{0.004}Co_{0.982}Al_{0.018}O₂ with a D50 of 3.5 µm) having a surface on which a ZrO₂ coating film was formed. The resultant formula including the Zr-coated large and small particles was Li_{1.04}Mg_{0.004}Co_{0.982}Al_{0.018}Zr_{0.021}O₂.

### Example 3: LCO doped with 6,500 ppm Al and 1,000 ppm Mg and surface coated with 16,000 ppm Zr

Lithium carbonate, a cobalt precursor (Co₃O₄) (D50: 4.5 µm), magnesium carbonate (MgCO₃), and aluminum oxide (Al₂O₃) were mixed to obtain a first mixture. Contents of lithium carbonate, Co₃O₄ (D50: 4.5 µm), magnesium carbonate, and aluminum oxide (Al₂O₃) in the first mixture were stoichiometrically controlled or selected to obtain Li_{1.04}Mg_{0.004}Co_{0.959}Al_{0.024}O₂.

The first mixture was heated to a temperature of 1,088 °C at a heating rate of 6 °C/min and then subjected to a primary heat treatment at the temperature of 1,088 °C for 15 hours in an air atmosphere to prepare large particles (Li_{1.04}Mg_{0.004}Co_{0.959}Al_{0.024}O₂) having a layered structure and an average particle diameter (D50) of about 17 µm.

Separately, a cobalt precursor (Co₃O₄) (D50: 2.5 µm), magnesium carbonate (MgCO₃), aluminum oxide (Al₂O₃), and lithium carbonate were mixed to obtain a second mixture. Contents of Co₃O₄, magnesium carbonate, aluminum oxide, and lithium carbonate in the second mixture were stoichiometrically controlled or selected to obtain Li_{1.04}Mg_{0.004}Co_{0.959}Al_{0.024}O₂.

The second mixture was heated to a temperature of 940 °C at a heating rate of 4.5 °C/min and then subjected to a primary heat treatment at the temperature of 940 °C for 5 hours to obtain small particles (Li_{1.04}Mg_{0.004}Co_{0.959}Al_{0.024}O₂) having a layered structure and an average particle diameter (D50) of about 3.5 µm.

The large particles and the small particles obtained in such a process were mixed in a weight ratio of 8:2, and then zirconium oxide was added thereto to obtain a third mixture. A content of the zirconium oxide was stoichiometrically controlled or selected such that a content of zirconium in a composite positive electrode active material was 16,000 ppm. The zirconium oxide (ZrO₂) had an average particle diameter (D50) of about 1 µm. The third mixture was subjected to a secondary heat treatment at a temperature of about 900 °C to obtain a bimodal positive electrode active material. A content (e.g., amount) of the zirconium oxide was stoichiometrically controlled or selected such that a content (e.g., amount) of zirconium in the bimodal positive electrode active material was 16,000 ppm. The bimodal positive electrode active material included large particles (Li_{1.04}Mg_{0.004}Co_{0.959}Al_{0.024}O₂ with a D50 of 17 µm) having a surface on which a ZrO₂ coating film was formed and small particles (Li_{1.04}Mg_{0.004}Co_{0.959}Al_{0.024}O₂ with a D50 of 3.5 µm) having a surface on which a ZrO₂ coating film was formed. The resultant formula including the Zr-coated large and small particles was Li_{1.04}Mg_{0.004}Co_{0.959}Al_{0.024}Zr_{0.017}O₂.

### Example 4: LCO doped with 6,500 ppm Al and 1,000 ppm Mg and surface coated with 18,000 ppm Zr

Lithium carbonate, Co₃O₄ (D50: 4.5 µm), magnesium carbonate, and aluminum oxide (Al₂O₃) were mixed to obtain a first mixture. Contents of lithium carbonate, Co₃O₄ (D50: 4.5 µm), magnesium carbonate, and aluminum oxide (Al₂O₃) in the first mixture were stoichiometrically controlled or selected to obtain Li_{1.04}Mg_{0.004}Co_{0.957}Al_{0.024}O₂.

The first mixture was heated to a temperature of 1,088 °C at a heating rate of 6 °C/min and then subjected to a primary heat treatment at the temperature of 1,088 °C for 15 hours in an air atmosphere to prepare large particles (Li_{1.04}Mg_{0.004}Co_{0.957}Al_{0.024}O₂) having a layered structure and an average particle diameter (D50) of about 17 µm.

Separately, a cobalt precursor (Co₃O₄) (D50: 2.5 µm), aluminum oxide (Al₂O₃), and lithium carbonate were mixed to obtain a second mixture. Contents of Co₃O₄, magnesium carbonate, aluminum oxide, and lithium carbonate in the second mixture were stoichiometrically controlled or selected to obtain Li_{1.04}Mg_{0.004}Co_{0.957}Al_{0.024}O₂.

The second mixture was heated to a temperature of 940 °C at a heating rate of 4.5 °C/min and then subjected to heat treatment at the temperature of 940 °C for 5 hours to obtain small particles (Li_{1.04}Mg_{0.004}Co_{0.957}Al_{0.024}O₂) having a layered structure and an average particle diameter (D50) of about 3.5 µm.

The large particles and the small particles obtained in such a process were mixed in a weight ratio of 8:2, and then zirconium oxide was added thereto to obtain a third mixture. A content of the zirconium oxide was stoichiometrically controlled or selected such that a content of zirconium in a composite positive electrode active material was 18,000 ppm. The zirconium oxide (ZrO₂) had an average particle diameter (D50) of about 1 µm. The third mixture was subjected to a secondary heat treatment at a temperature of about 900 °C to obtain a bimodal positive electrode active material. A content (e.g., amount) of the zirconium oxide was stoichiometrically controlled or selected such that a content (e.g., amount) of zirconium in the bimodal positive electrode active material was 18,000 ppm. The bimodal positive electrode active material included large particles (Li_{1.04}Mg_{0.004}Co_{0.957}Al_{0.024}O₂ with a D50 of 17 µm) having a surface on which a ZrO₂ coating film was formed and small particles (Li_{1.04}Mg_{0.004}Co_{0.957}Al_{0.024}O₂ with a D50 of 3.5 µm) having a surface on which a ZrO₂ coating film was formed. The resultant formula including the Zr-coated large and small particles was Li_{1.04}Mg_{0.004}Co_{0.957}Al_{0.024}Zr_{0.019}O₂.

### Example 5: LCO doped with 6,500 ppm Al and 1,000 ppm Mg and surface coated with 20,000 ppm Zr

Lithium carbonate, Co₃O₄ (D50: 4.5 µm), magnesium carbonate, and aluminum oxide (Al₂O₃) were mixed to obtain a first mixture. Contents of lithium carbonate, Co₃O₄ (D50: 4.5 µm), magnesium carbonate, and aluminum oxide (Al₂O₃) in the first mixture were stoichiometrically controlled or selected to obtain Li_{1.04}Mg_{0.004}Co_{0.955}Al_{0.024}O₂.

The first mixture was heated to a temperature of 1,088 °C at a heating rate of 6 °C/min and then subjected to a primary heat treatment at the temperature of 1,088 °C for 15 hours in an air atmosphere to prepare large particles (Li_{1.04}Mg_{0.004}Co_{0.955}Al_{0.024}O₂) having a layered structure and an average particle diameter (D50) of about 17 µm.

Separately, a cobalt precursor (Co₃O₄) (D50: 2.5 µm), aluminum oxide (Al₂O₃), magnesium carbonate, and lithium carbonate were mixed to obtain a second mixture. Contents of Co₃O₄, magnesium carbonate, aluminum oxide, and lithium carbonate in the second mixture were stoichiometrically controlled or selected to obtain Li_{1.04}Mg_{0.004}Co_{0.955}Al_{0.024}O₂.

The second mixture was heated to a temperature of 940 °C at a heating rate of 4.5 °C/min and then subjected to a heat treatment at the temperature of 940 °C for 5 hours to obtain small particles (Li_{1.04}Mg_{0.004}Co_{0.955}Al_{0.024}O₂) having a layered structure and an average particle diameter (D50) of about 3.5 µm.

The large particles and the small particles obtained in such a process were mixed in a weight ratio of 8:2, and then zirconium oxide was added thereto to obtain a third mixture. A content of the zirconium oxide was stoichiometrically controlled or selected such that a content of zirconium in a composite positive electrode active material was 20,000 ppm. The zirconium oxide (ZrO₂) had an average particle diameter (D50) of about 1 µm. The third mixture was subjected to a secondary heat treatment at a temperature of about 900 °C to obtain a bimodal positive electrode active material. A content (*e.g.*, amount) of the zirconium oxide was stoichiometrically controlled or selected such that a content (*e.g.*, amount) of zirconium in the bimodal positive electrode active material was 20,000 ppm. The bimodal positive electrode active material included large particles (Li_{1.04}Mg_{0.004}Co_{0.955}Al_{0.024}O₂ with a D50 of 17 µm) having a surface on which a ZrO₂ coating film was formed and small particles (Li_{1.04}Mg_{0.004}Co_{0.955}Al_{0.024}O₂ with a D50 of 3.5 µm) having a surface on which a ZrO₂ coating film was formed. The resultant formula including the Zr-coated large and small particles was Li_{1.04}Mg_{0.004}Co_{0.955}Al_{0.024}Zr_{0.021}O₂.

### Comparative Example 1: LCO doped with 5,000 ppm Al and 1,000 ppm Mg and surface coated with 7,500 ppm Zr

A bimodal positive electrode active material was obtained in substantially the same manner as in Example 1, except that LCO doped with a content (e.g., amount) of 5,000 ppm of aluminum and 1,000 ppm magnesium, and surface coated with a content of 7,500 ppm of zirconium was utilized in a positive electrode active material.

### Comparative Example 2: LCO doped with 6,500 ppm Al and 1,000 ppm Mg and surface coated with 2,250 ppm Zr

A bimodal positive electrode active material was obtained in substantially the same manner as in Example 1, except that LCO doped with a content of 6,500 ppm of aluminum and 1,000 ppm magnesium, and surface coated with a content of 2,250 ppm of zirconium was utilized in a positive electrode active material.

### Comparative Example 3: LCO doped with 6,500 ppm Al and 1,000 ppm Mg and surface coated with 7,500 ppm Zr

A bimodal positive electrode active material was obtained in substantially the same manner as in Example 1, except that LCO doped with a content of 6,500 ppm of aluminum and 1,000 ppm magnesium, and surface coated with a content of 7,500 ppm of zirconium was utilized in a positive electrode active material.

### Comparative Example 4: LCO doped with 6,500 ppm Al and 1,000 ppm Mg and surface coated with 12,750 ppm Zr

A bimodal positive electrode active material was obtained in substantially the same manner as in Example 1, except that LCO doped with a content of 6,500 ppm of aluminum and 1,000 ppm magnesium, and surface coated with a content of 12,750 ppm of zirconium was utilized in a positive electrode active material.

### Comparative Example 5: LCO doped with 6,500 ppm Al and 1,000 ppm Mg and surface coated with 21,000 ppm Zr

A bimodal positive electrode active material was obtained in substantially the same manner as in Example 1, except that LCO doped with a content of 6,500 ppm of aluminum and 1,000 ppm magnesium, and surface coated with a content of 21,000 ppm of zirconium was utilized in a positive electrode active material.

### Comparative Example 6: LCO doped with 6,500 ppm Al and 1,000 ppm Mg and surface coated with 16,000 ppm Zr and 700 ppm Ti

Large particles and small particles were obtained in substantially the same manner as in Example 1, except that LCO doped with a content of 6,500 ppm of aluminum and 1,000 ppm magnesium was utilized to obtain the large and small particles.

The large particles and small particles obtained in such a process were mixed in a weight ratio of 8:2, and then titanium oxide and zirconium oxide were added thereto to obtain a third mixture. A content of zirconium oxide was controlled or selected such that a content of zirconium in the positive electrode active material was 16,000 ppm, and a content of titanium oxide was controlled or selected such that a content of titanium in the positive electrode active material was 700 ppm.

The third mixture was subjected to secondary heat treatment at a temperature of about 900 °C to obtain a bimodal positive electrode active material.

### Comparative Example 7: LCO doped with 6,500 ppm Al and 1,000 ppm Mg, and surface coated with 18,000 ppm Zr and 700 ppm Ti

A bimodal positive electrode active material was obtained in substantially the same manner as in Comparative Example 6, except that a content of zirconium oxide was changed such that a content of zirconium in a positive electrode active material was changed to 18,000 ppm.

In Examples 1-5 and Comparative Examples 1-7, contents of aluminum doped into a positive electrode active material core, and zirconium and titanium present on a surface are summarized and shown in Table 1.

**Table 1**

| Classification | Al [ppm] | Zr [ppm] | Ti [ppm] |
|---|---|---|---|
| Example 1 | 5,000 | 18,000 | X |
| Example 2 | 5,000 | 20,000 | |
| Example 3 | 6,500 | 16,000 | |
| Example 4 | 6,500 | 18,000 | |
| Example 5 | 6,500 | 20,000 | |
| Comparative Example 1 | 5,000 | 7,500 | X |
| Comparative Example 2 | 6,500 | 2,250 | X |
| Comparative Example 3 | 6,500 | 7,500 | X |
| Comparative Example 4 | 6,500 | 12,750 | X |
| Comparative Example 5 | 6,500 | 21,000 | X |
| Comparative Example 6 | 6,500 | 16,000 | 700 |
| Comparative Example 7 | 6,500 | 18,000 | 700 |

### Manufacturing of lithium secondary battery

### Manufacturing Example 1

A uniformly dispersed slurry for forming a positive electrode active material layer was prepared by removing bubbles from a mixture of the positive electrode active material obtained in Example 1, polyvinylidene fluoride, and carbon black as a conductive material utilizing a mixer. N-methyl 2-pyrrolidone as a solvent was added to the mixture, and a mixing ratio of the positive electrode active material, polyvinylidene fluoride, and carbon black was a weight ratio of 98:1:1. After the slurry prepared according to such a process was applied on an aluminum foil utilizing a doctor blade to form the aluminum foil in the form of a thin electrode plate, the thin electrode plate was dried at a temperature of 135 °C for 3 hours or more and then subjected to rolling and vacuum drying processes to prepare a positive electrode.

Natural graphite, CMC, and SBR were mixed to obtain a composition for forming a negative electrode active material, and the composition was applied on a copper current collector and dried to prepare a negative electrode. A weight ratio of natural graphite, CMC, and SBR was 97.5:1:1.5, and a content of distilled water was about 50 parts by weight with respect to the total weight of 100 parts by weight of natural graphite, CMC, and SBR.

A separator (thickness: about 10 µm) made of a porous PE film was interposed between the positive electrode and the negative electrode, and an electrolyte was injected to manufacture a lithium secondary battery. As the electrolyte, a solution, which included 1.1M LiPF₆ dissolved in a solvent in which ethylene carbonate (EC), ethyl methyl carbonate (EMC), and dimethyl carbonate (DMC) were mixed in a volume ratio of 3:4:3, was utilized.

### Manufacturing Examples 2 to 5

Lithium secondary batteries were manufactured in substantially the same manner as in Manufacturing Example 1, except that, during preparation of a positive electrode, the positive electrode active materials of Examples 2 to 5 were utilized instead of the positive electrode active material of Example 1.

### Comparative Manufacturing Examples 1 to 7

Lithium secondary batteries were manufactured in substantially the same manner as in Manufacturing Example 1, except that, during preparation of a positive electrode, the positive electrode active materials of Comparative Examples 1 to 7 were utilized instead of the positive electrode active material of Example 1.

### Evaluation Example 1: Scanning electron microscope (SEM) analysis

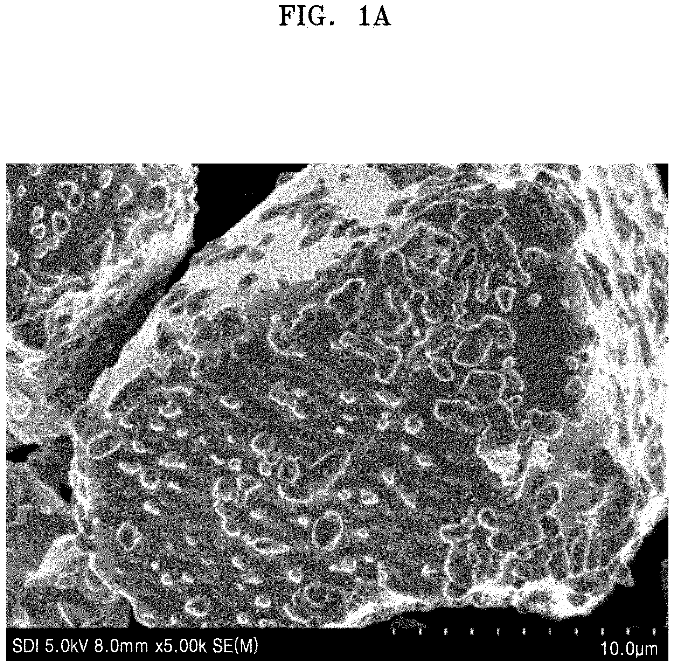

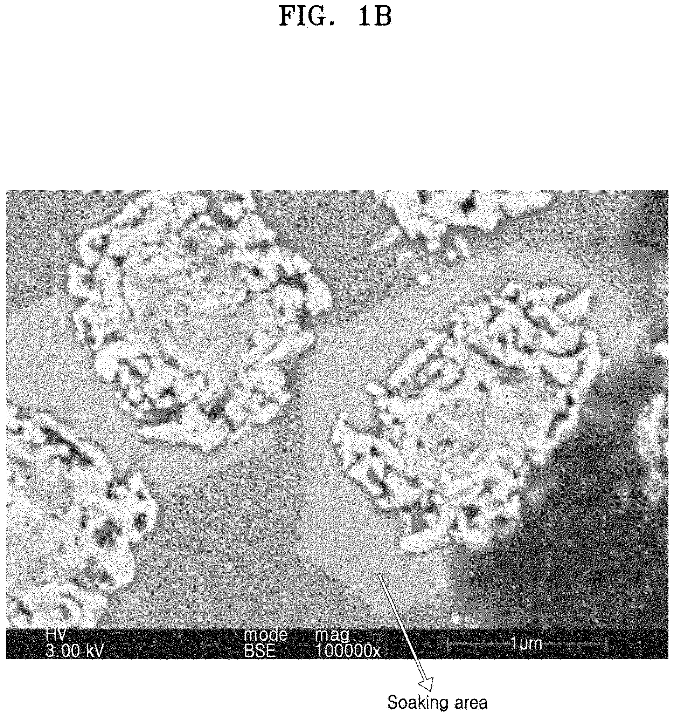

The positive electrode active materials of Example 4 and Comparative Example 6 were analyzed utilizing a SEM. Results of analyzing the positive electrode active materials prepared according to Example 4 and Comparative Example 6 utilizing a SEM are shown in FIGs. 1A and 1B.

As shown in FIG. 1B, in the positive electrode active material of Comparative Example 6, a soaking area was observed because titanium was contained in a coating film.

Referring to FIG. 1A, it could be confirmed that a surface of the positive electrode active material of Example 4 did not have the soaking area of the positive electrode active material of Comparative Example 6, and a coating film containing zirconium was present in the form of an island coating film.

### Evaluation Example 2: SEM-Energy dispersive spectroscopy (EDS) analysis

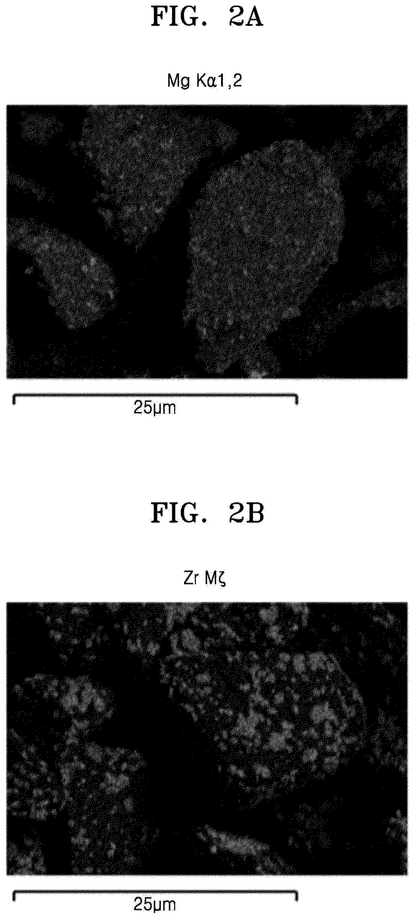

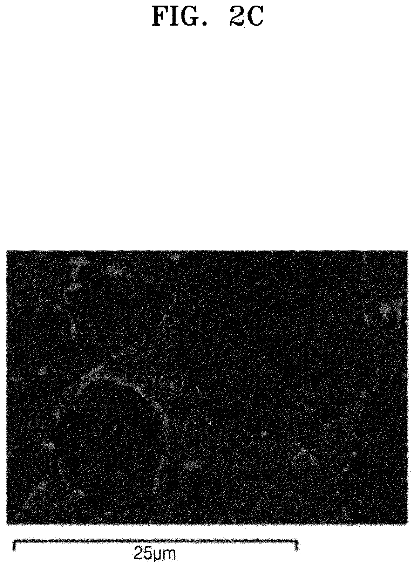

SEM-EDS analysis was performed on the positive electrode active material of Example 4. SEM-EDS analysis results of the positive electrode active material of Example 4 are shown in FIGs. 2A to 2C. FIGs. 2A and 2B respectively show results of analyzing magnesium and zirconium on a surface of the positive electrode active material, and FIG. 2C shows results of analyzing an overall composition on the surface of the positive electrode active material.

Referring to FIGs. 2A to 2C, in the positive electrode active material of Example 4, magnesium was not detected on a surface of lithium cobalt-based oxide coated only with zirconium without titanium. The fact that magnesium was not detected as described above meant that titanium was not coated.

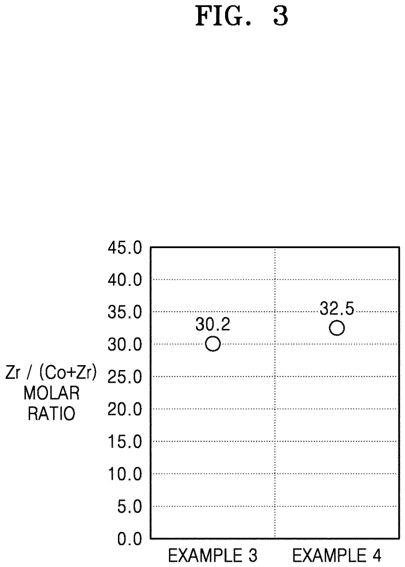

For example, a molar ratio Zr/(Co+Zr) of a content of zirconium to a content of cobalt and zirconium on a surface was investigated and shown in FIG. 3. A molar ratio Zr/(Co+Zr) on a surface was investigated utilizing energy dispersive X-ray microanalysis (EDAX).

Referring to FIG. 3, in the positive electrode active material of Example 4, a molar ratio Zr/(Co+Zr) increased as a coating amount of zirconium increased as compared with the positive electrode active material of Example 3.

### Evaluation Example 3: SEM-EDS analysis

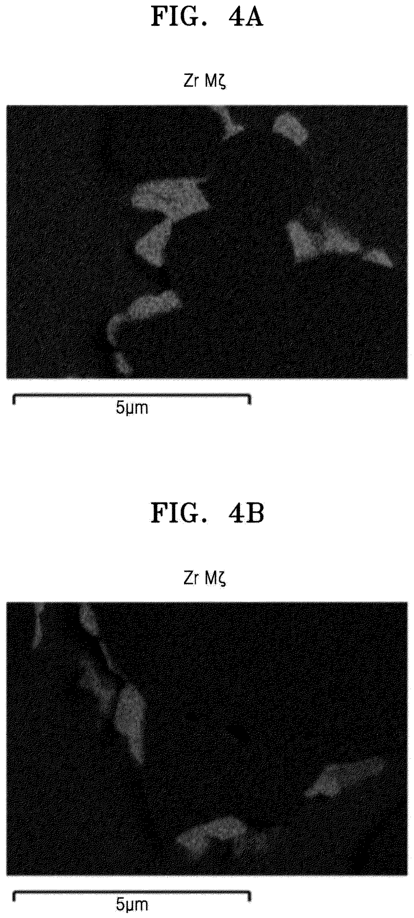

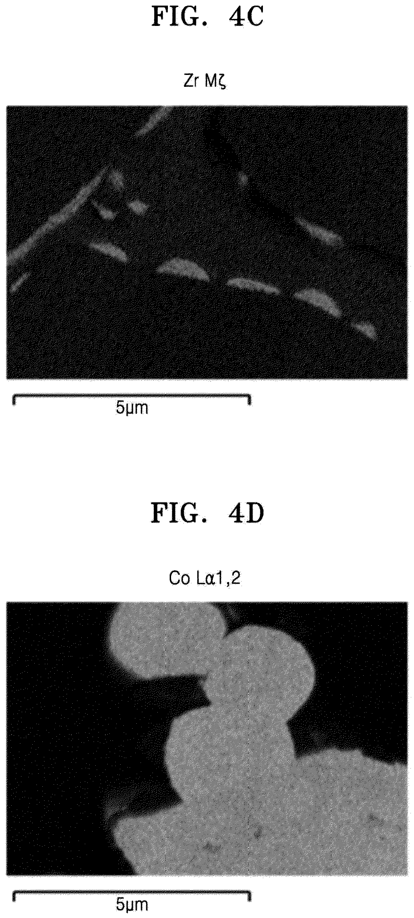

SEM-EDS analysis was performed on the positive electrode active material of Example 4. Results thereof are shown in FIGs. 4A to 4F. FIGs. 4A to 4C show results of analyzing zirconium in a zirconium coating layer of the positive electrode active material, and FIGs. 4D to 4F show results of analyzing cobalt in the zirconium coating layer of the positive electrode active material. FIGs. 4A and 4D show results of SEM-EDS analysis of the same area in the positive electrode active material.

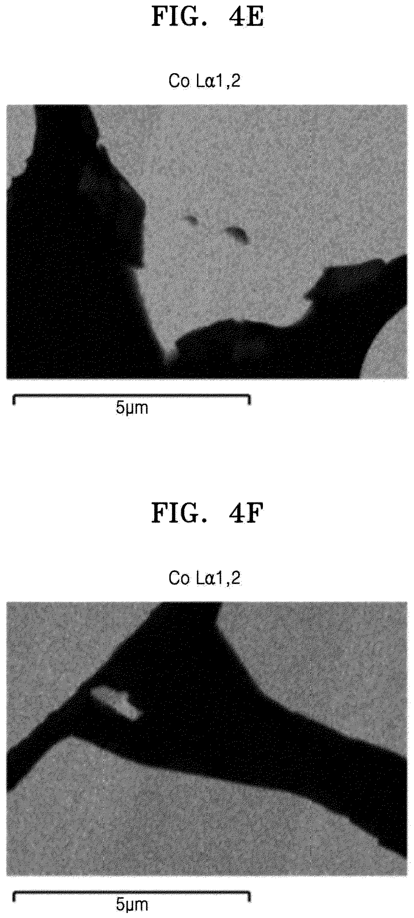

FIGs. 4B and 4E show results of SEM-EDS analysis of the same area in the positive electrode active material, and FIGs. 4C and 4F show results of SEM-EDS analysis of the same area in the positive electrode active material.

Referring to FIGs. 4A to 4F, it was confirmed that a zirconium coating film was densely formed on the positive electrode active material, and it could be seen that cobalt was detected only in a core of the positive electrode active material.

### Evaluation Example 4: Charge/discharge characteristics

The lithium secondary batteries of Manufacturing Examples 1 to 5 and Comparative Manufacturing Examples 1 to 5 were charged at a constant current rate of 0. 5 C at a temperature of 25 °C until to a state of charge (SOC) reached 90 % and aged for 48 hours, and then, in a constant current/constant voltage mode, while 4.58 V was maintained, the charging was cut-off at a current rate of 0.05 C. Subsequently, during discharging, the lithium secondary batteries were discharged at a constant current rate of 0.5 C until a voltage reached 3.0 V (formation operation).

The lithium secondary batteries subjected to the formation operation were charged at a constant current rate of 0.2 C until a voltage reached 4.55 V. Charged cells were rested for about 10 minutes and then were discharged at a constant current rate of 0.2 C until the voltage reached 3 V.

Initial charge/discharge efficiency was evaluated according to Equation 1. Evaluation results are shown in Table 2. Initial charge/discharge efficiency (%) = (discharge capacity at the first cycle (0.2 C)/ charge capacity at the first cycle (0.2 C)) × 100

### Evaluation Example 5: Direct current internal resistance (DC-IR) evaluation before and after high temperature charging/discharging

For the lithium secondary batteries of Manufacturing Examples 1 to 5 utilizing the positive electrode active materials of Examples 1 to 5 and the lithium secondary batteries of Comparative Manufacturing Examples 1 to 5 utilizing the positive electrode active materials of Comparative Examples 1 to 5, before high temperature charge/discharge evaluation and after high temperature charge/discharge evaluation, respective DC-IRs were measured through the following method. Measurement results are as shown in Table 2.

In a 1^{st} cycle, the lithium secondary batteries were charged with a constant current at a current rate of 0.2 C until a voltage reached 4.45 V (vs. Li), and then, in a constant voltage mode, while 4.45 V is maintained, the charging was cut-off at a current rate of 0.05 C. Subsequently, during discharging, the lithium secondary batteries were discharged at a constant current rate of 0.2 C until the voltage reached 3.0 V (vs. Li) (formation operation).

In a 2^{nd} cycle, the lithium secondary batteries were charged at a constant current rate of 0.2 C up to 4.45 V (vs. Li), and then, in a constant voltage mode, while 4.45 V was maintained, the charging was cut off at a current rate of 0.05 C. Next, after the lithium secondary batteries were discharged at a rate of 0.2 C for 2 hours and 30 minutes until an SOC reached 10 % or 20 %, the lithium secondary batteries were discharged at a constant current rate of 3 C for 10 seconds, discharged at a rate of 0.2 C for 10 seconds, and finally discharged at a constant current rate of 3 C for 10 seconds again.

During constant current discharging at each C-rate, DC-IR (wherein R=ΔVlΔI) was calculated from a ratio of an average voltage change ΔV to an average current change ΔI, and an average value thereof was obtained as a measured value.

### Evaluation Example 6: High temperature lifetime

The lithium secondary batteries of Manufacturing Examples 1 to 5 utilizing the positive electrode active materials of Examples 1 to 5 and the lithium secondary batteries of Comparative Manufacturing Examples 1 to 5 utilizing the positive electrode active materials of Comparative Examples 1 to 5 were charged at a constant current of 0. 5 C at a temperature of 25 °C until to an SOC reached 90 % and aged for 48 hours, and then, in a constant current/constant voltage mode, while 4.58 V was maintained, the charging was cut-off at a current rate of 0.05 C. Subsequently, during discharging, the lithium secondary batteries were discharged at a constant current rate of 0.5 C until a voltage reached 3.0 V (formation operation, 1^{st} cycle).

The lithium secondary batteries that underwent the 1^{st} cycle of the formation operation were charged at a constant current rate of 0.2 C at a temperature of 45 °C until the voltage reached 4.55 V. Charged cells were rested for about 10 minutes and discharged at a constant current rate of 0.2 C until the voltage reached 3 V, and such a cycle was repeated 30 times for evaluation.

A high temperature lifetime was evaluated according to Equation 2. Evaluation results are shown in Table 2. high temperature lifetime (%) = (discharge capacity at the 30th cycles/discharge capacity at the first cycle) × 100

**Table 2**

| Classification | | Comparative Manufacture Example 1 | Comparative Manufacture Example 2 | Comparative Manufacture Example 3 | Comparative Manufacture Example 4 | Comparative Manufacture Example 5 | Manufacture Example 1 | Manufacture Example 2 | Manufacture Example 3 | Manufacture Example 4 | Manufacture Example 5 |
|---|---|---|---|---|---|---|---|---|---|---|---|
| Charge capacity at 0.2 C | mAh/g | 205.7 | 204.8 | 206.2 | 207.0 | 208.6 | 209.2 | 209.5 | 207.5 | 208.2 | 208.5 |
| Discharge capacity at 0.2 C | | 189.7 | 186.9 | 188.7 | 189.5 | 191.0 | 194.7 | 194.6 | 190.1 | 191.3 | 191.1 |
| Charge/discharg e Efficiency | % | 92.2 | 91.3 | 91.5 | 91.5 | 91.6 | 93.1 | 92.9 | 91.6 | 91.9 | 91.7 |
| DC-IR (SOC10) | Ω | 25.9 | 31.3 | 30.6 | 25.3 | 13.0 | 11.9 | 12.0 | 14.2 | 12.8 | 12.9 |
| DC-IR (SOC20) | | 13.8 | 17.8 | 19.9 | 19.2 | 11.7 | 10.6 | 10.8 | 12.0 | 11.5 | 11.6 |
| High temperature lifetime (@ 30th cycle) | % | 3.5 | 10.4 | 18.9 | 39.5 | 53.5 | 67.1 | 66.7 | 84.5 | 87.9 | 86.1 |

As shown in Table 2, it could be seen that the resistance characteristics of the lithium secondary batteries of Manufacturing Examples 1 to 5 were improved as compared with those of Comparative Manufacturing Examples 1 to 5. In addition, the charge/discharge efficiency of the lithium secondary batteries of Manufacturing Examples 1 to 5 were equal to those of Comparative Manufacturing Examples 1 to 5 or were improved as compared with Comparative Manufacturing Examples 1 to 5.

On the other hand, the lithium secondary batteries of Comparative Manufacturing Examples 1 to 4 exhibited good or suitable charge/discharge efficiency but showed lower resistance characteristics than those of Manufacturing Examples 1 to 5.

For example, as shown in Table 2, it could be confirmed that a high temperature lifetime of the lithium secondary batteries of Manufacturing Examples 1 to 5 was increased as compared with the lithium secondary batteries of Comparative Manufacturing Examples 1 to 5.

### Evaluation Example 7: TEM-SAED analysis

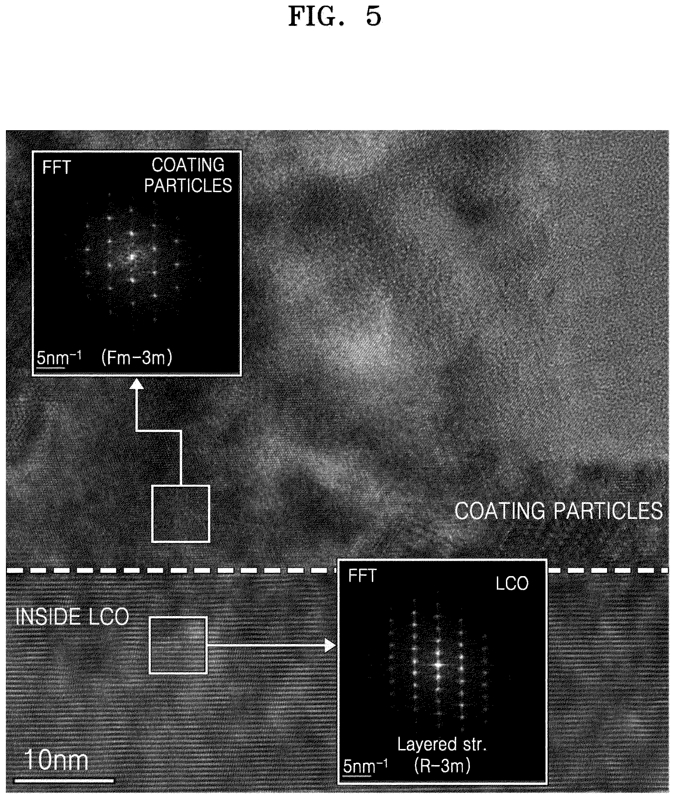

TEM-SAED analysis was performed on the positive electrode active material of Example 4. Results thereof are shown in FIG. 5.

Referring to FIG. 5, it was confirmed that a coating film containing zirconium was formed on a surface of the positive electrode active material of Example 4, and it could be seen that cobalt was detected only in a core of the positive electrode active material. For example, it could be seen that a crystal structure inside the positive electrode active material was an R-3m layered structure, and coating particles of a zirconium coating film had an Fm-3m cubic structure.

While the disclosure has seen described with reference to embodiments, it will be understood by those of ordinary skill in the art that one or more suitable changes and modifications may be made therein without departing from the spirit and scope by the following claims and equivalents thereof.

A positive electrode active material according to embodiments may have excellent or suitable high voltage, high power, and high temperature characteristics. If a positive electrode including such a positive electrode active material is provided, it is possible to manufacture a high energy density lithium secondary battery having improved resistance characteristics at high voltages as well as improved power characteristics and high temperature life characteristics.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present disclosure, and should not be interpreted in an idealized or overly formal sense, unless expressly so defined herein.

Further, the use of "may" when describing embodiments of the present disclosure refers to "one or more embodiments of the present disclosure."

## Claims

1. A positive electrode active material for a lithium secondary battery (31), the positive electrode active material comprising:
a lithium cobalt-based oxide; and
a zirconium-based oxide on a surface of the lithium cobalt-based oxide,
wherein
the lithium cobalt-based oxide comprises 4,000 ppm or more of aluminum,
and
a content of zirconium in the positive electrode active material is in a range of 15,000 ppm to 20,000 ppm.

2. The positive electrode active material as claimed in claim 1, wherein the zirconium-based oxide is a compound represented by Formula 1:
Formula 1 MgₓZr_{y}M1_{z}O₂
wherein, in Formula 1, 0≤x≤0.1, 0.8≤y≤1, 0≤z≤0.1, 0.9<x+y+z<1.1, and M1 is at least one element selected from among Co, Al, B, Ca, Sr, Ba, V, Cr, Fe, Cu, W, Mo, Ta, and Nb.

3. The positive electrode active material as claimed in claim 1, wherein the zirconium-based oxide is ZrO₂.

4. The positive electrode active material as claimed in claim 2, wherein, in Formula 1, x is 0.

5. The positive electrode active material as claimed in claim 1, wherein the zirconium-based oxide is in particle form and has an average particle size D50 of 0.2 µm to 2 µm determined by a dynamic light-scattering method.

6. The positive electrode active material of any one of the preceding claims, wherein a content of aluminum is in a range of 4,000 ppm to 8,000 ppm.

7. The positive electrode active material of any one of the preceding claims, wherein a content of zirconium in the positive electrode active material is in a range of 18,000 ppm to 20,000 ppm.

8. The positive electrode active material of any one of the preceding claims, wherein a molar ratio of Zr/(Co+Zr) is in a range of 0.25 to 0.35.

9. The positive electrode active material as claimed in claim 1, wherein the content of magnesium is in a range of 500 ppm to 2,000 ppm.

10. The positive electrode active material of any one of the preceding claims, wherein the positive electrode active material is a compound represented by Formula 2:
Formula 2 Li_{a-b}Mg_{b}CoₓAl_{y}M1_{z}O₂
wherein 0.9<a<1.1, 0≤b<0.1, 0.02≤x≤1, 0.015≤y≤0.03, 0<z<0.03, 0.9≤ x+y+z≤1.1, and M1 is at least one element selected from among Zr, Ni, Mn, B, Ca, Sr, Ba, V, Cr, Fe, Cu, W, Mo, Ta, and Nb.

11. The positive electrode active material of any one of the preceding claims, wherein
the lithium cobalt-based oxide comprises small particles, large particles, or a mixture of the small particles and the large particles,
the large particles have an average size D50 of 10 µm to 120 µm determined by a dynamic light-scattering method, and
the small particles have an average size D50 of 2 µm to 8 µm determined by a dynamic light-scattering method.

12. The positive electrode active material as claimed in claim 11, wherein the lithium cobalt-based oxide comprises the mixture of the small particles and the large particles and a mixing weight ratio of the large particles to the small particles is in a range of 7:3 to 9:1.

13. A method of preparing the positive electrode active material for a lithium secondary battery of claim 1, the method comprising:
mixing a lithium cobalt-based oxide containing 4,000 ppm or more of aluminum and a zirconium precursor to obtain a mixture, wherein a content of the zirconium precursor in the mixture is specified such that a content of zirconium in the positive electrode active material is in a range of 15,000 ppm to 20,000 ppm; and
performing a heat treatment on the mixture to prepare the positive electrode active material of claim 1.

14. The method of preparing a positive electrode active material for a lithium secondary battery as claimed in claim 13, wherein the heat treatment is performed at a temperature of 900 °C to 1,100 °C.

15. A lithium secondary battery (31) comprising:
a positive electrode (33) comprising the positive electrode active material of any one of claims 1 to 12;
a negative electrode (32); and
a separator (34) interposed between the positive electrode (33) and the negative electrode (32).
